(19) Europäisches Patentamt
European Patent Office
Office européen des brevets

(11) Veröffentlichungsnummer: **0 210 607 B1**

(12) **EUROPÄISCHE PATENTSCHRIFT**

(45) Veröffentlichungstag der Patentschrift: **03.06.92**

(51) Int. Cl.[5]: **C07C 69/54**, C07C 67/08, C09J 4/00, C09K 3/12

(21) Anmeldenummer: **86110268.9**

(22) Anmeldetag: **25.07.86**

(54) **Neue (Meth)acrylsäureester sowie deren Verwendung.**

(30) Priorität: **02.08.85 DE 3527717**

(43) Veröffentlichungstag der Anmeldung:
**04.02.87 Patentblatt 87/06**

(45) Bekanntmachung des Hinweises auf die Patenterteilung:
**03.06.92 Patentblatt 92/23**

(84) Benannte Vertragsstaaten:
**AT BE CH DE FR GB IT LI NL**

(56) Entgegenhaltungen:
**EP-A- 0 104 491**
**DE-A- 2 336 596**
**FR-A- 2 276 808**

(73) Patentinhaber: **Henkel Kommanditgesellschaft auf Aktien**
**Postfach 1100 Henkelstrasse 67**
**W-4000 Düsseldorf-Holthausen(DE)**

(72) Erfinder: **Marten, Klaus, Dr.**
**Röntgenstrasse 2**
**W-4010 Hilden(DE)**
Erfinder: **Kammer, Lothar**
**Geibelstrasse 102**
**W-3000 Hannover 1(DE)**

**EP 0 210 607 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue (Meth)acrylsäureester sowie ein Verfahren zur Herstellung dieser Verbindungen. Ferner bezieht sich die Erfindung auf lagerstabile bei Sauerstoffausschluß durch Aktivatoren oder durch UV-Initiierung härtbare Systeme auf Basis von Estern der Methacrylsäure und/oder Acrylsäure, die sich zum Kleben, Dichten, Füllen und Beschichten, insbesondere metallischer Flächen, eignen.

Verbindungen, die mehr als eine (Meth)acrylsäureestergruppierung im Molekül enthalten, sind seit langem bekannt und werden als insbesondere auch anaerob härtende Klebe-, Dicht-, Füll- und Beschichtungsmassen eingesetzt. Häufig werden zu diesem Zweck wenigstens 2 (Meth)acrylsäureestergruppen im Molekül enthaltende Verbindungen verwendet. Durch Variation des Grundmoleküls können bestimmte gewünschte Eigenschaften dieser Massen beeinflußt werden. Neben einer raschen Aushärtezeit, insbesondere einer relativ kurzen Zeit bis zum Erreichen einer Anfangsfestigkeit, werden meist auch gute Festigkeiten an glatten Oberflächen und bei Temperaturbelastung gewünscht.

Seit längerem sind Massen bekannt, die entweder gute Festigkeiten an glatten Oberflächen erreichen oder aber eine gute Thermoresistenz aufweisen.

Aus der DE-A-2 336 596 ist eine Beschichtungsmasse aus Polyacrylat bekannt. Dabei handelt es sich um ein Polyacrylat aus Polyolen, die sich von Fett- oder Harzsäuren ableiten, z.B. durch Reduktion von Fettsäure, Harz, Dimersäure, Trimersäure mit Maleinsäure oder Fumarsäure umgesetzte Harze usw.. Von ihrer Eignung als Klebstoffe, insbesondere als anaerobe Klebstoffe, ist keine Rede.

Aus der FR-A-2 276 808 ist eine Zementmasse zur Reparatur von Zähnen bekannt. Sie besteht aus einem anorganischen Füllstoff, einem Bindemittel und einem Katalysatorsystem. Das Bindemittel wird aus den Reaktionsprodukten eines dreiwertigen Alkohols gebildet, wobei alle 3 OH-Gruppen mit Acrylsäure bzw. Methacrylsäure verestert sind.

Aufgabe der vorliegenden Erfindung war es, solche (Meth)acrylsäureester zu finden, die sowohl eine rasche Aushärtezeit als auch eine gesteigerte Festigkeit an glatten Oberflächen aufweisen, wenn sie anaeroben Bedingungen ausgesetzt werden. Eine weitere Aufgabe bestand darin, entweder als alleinige Komponente oder als wesentlichen Bestandteil von bei Ausschluß von Sauerstoff härt- bzw. vernetzbaren Mischungen oder Kleb-, Dichtungs- oder Füllmitteln mit einem weiten Bereich technisch erwünschter günstiger Eigenschaften zu liefern. Ausserdem sollten die neuartigen Abmischungen zusätzlich durch energiereiche Strahlung wie UV-Licht oder Elektronenstrahlung härtbar sein.

Erfindungsgemäß sind die neuen Verbindungen der allgemeinen Formel:

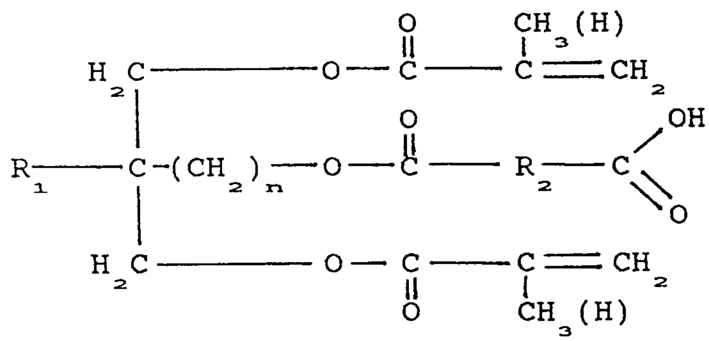

oder

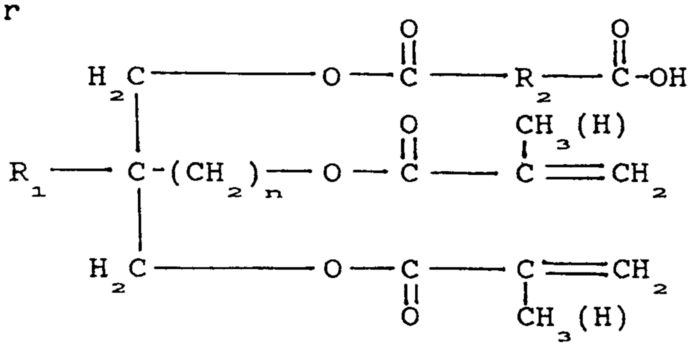

wobei n 0 oder 1 ist und $R_1$ entweder H oder ein Alkylrest mit 1 bis 3 Kohlenstoffatomen ist und $R_2$ keine Heteroatome aber gegebenenfalls Doppelbindungen enthaltender Rest mit 2 bis 8 Kohlenstoffatomen, der aliphatischer, cycloaliphatischen oder aromatischen Art sein kann, sowie Gemische der beiden stellungsisomeren Typen. Ester, in denen der Methacrylsäurerest vorliegt, sind bevorzugte Verbindungen hinsichtlich vieler Anwendungen.

Zur Herstellung der neuen Ester geht man von den entsprechenden trifunktionellen Alkoholen aus, insbesondere von Glyzerin, trimethylolmethan, trimethylolethan oder trimethylol propan, wobei man in an sich bekannter Weise eine partielle Veresterung mit (Meth)acrylsäure durchführt. Natürlich ist es auch möglich, in ebenfalls an sich bekannter Weise eine Umesterung mit den Methyl- oder Ethylestern der genannten Säure vorzunehmen. Im allgemeinen entstehen bevorzugt die 1,3-Ester neben den 1,2-Estern der Triole . Selbstverständlich hat man dafür zu sorgen, daß keine vorzeitige Polymerisation eintritt.

Dies gilt ebenso für den zweiten Verfahrensschritt, die Umsetzung der freien Hydroxylgruppen mit den Dicarbonsäuren bzw. deren Anhydriden. Als Dicarbonsäuren bzw. deren Anhydride sind insbesondere die aus der Gruppe von Bernsteinsäure, Adipinsäure, Maleinsäure, Hexahydrophthalsäure, Phthalsäure oder Bicyclo-[2,2,1]-hept-5-en-2,3-dicarbonsäure geeignet. Das molare Verhältnis von Hydroxylgruppe zu Dicarbonsäure bzw. Anhydrid soll etwa 1:1 betragen.

Die neuen Di(meth)acrylate unterscheiden sich von den bisher bekannten durch die deutliche Verbesserung der Haftung an glatten Oberflächen bei gleichzeitiger Erhöhung der Thermoresistenz.

Gegenstand der Erfindung sind demnach weiterhin erhärtbare Klebe-, Dicht-, Füll- und Beschichtungsmassen, die als wesentlichen Bestandteil die vorstehend beschriebenen Verbindungen enthalten. Im allgemeinen liegen diese, bezogen auf andere copolymerisierbare Verbindungen in einer Menge von 10 - 90 %, bevorzugt 20 - 70 % vor.

Als weitere polymerisierbare Verbindungen können in diesen Massen sowohl Mono(meth)-acrylsäureester als auch Bis(meth)acrylsäureester verwendet werden.

Auch kann die Mitverwendung von freien polymerisierbaren Carbonsäuren wie z.B. (Meth)acrylsäure in untergeordneter Menge angezeigt sein.

Für bestimmte Anwendungszwecke können noch Zusätze von Verdickungsmitteln, Weichmachern und Farbstoffen sowie geeigneten Polymerisationsbeschleunigern erfolgen.

Die so hergestellten Massen sind, je nach Härtungsprinzip und Startersystem, zum Verbinden, Abdichten, Ausfüllen oder Beschichten unterschiedlichster Materialien insbesondere dann geeignet, wenn glatte Oberflächen vorliegen und gleichzeitig eine Temperaturbelastbarkeit gefordert wird.

Verwendung können die neuen Ester der (Meth)acrylsäure auch als solche Klebmittel finden, die durch Aktivierungsmittel und/oder bei Bestrahlung durch UV-Licht oder Elektronenstrahlen härtbar bzw. vernetzbar sind.

1) Herstellungsbeispiel

In einer heizbaren, mit Rückflußkühler und Rührer versehenen Reaktionsapparatur wurden 1,15 Mol (262 g) Di(meth)acrylsäureester des Glyzerins vorgelegt und mit 850 ppm Hydrochinon zwecks Stabilisierung versetzt.

Unter Rühren wurde auf 50 °C Innentemperatur erhitzt und 1/2 Mol Bernsteinsäureanhydrid (50 g) sowie 0,05 % Benzyltrimethylammoniumchlorid (bezogen auf den gesamten Ansatz) zugesetzt und die Temperatur auf 80 °C gesteigert. Dann wurden weitere 25 g Anhydrid zudosiert und wiederum auf 80 °C gebracht. Anschließend wurden die restlichen 25 g Anhydrid zugegeben und 8 Stunden bei 80 °C gerührt. Zur Beendigung wurden 0,8 Gew.-% wasserfreies Ethanol zudosiert und in stündlichem Abstand die Säurezahl bestimmt. Nachdem der theoretische Wert erreicht war, ließ man auf Zimmertemperatur abkühlen.

2) Klebstoffe

Es wurden zwei verschiedene anaerobe Kleber hergestellt; sie bestanden aus:

2a) 50 % Methacrylsäureester gemäß Beispiel 1 und
46 % Triethylenglykoldimethacrylat sowie
3 % Cumolhydroperoxidlösung (70 %ig in Cumol) und
1 % Tri-n-butylamin

2b) 96 % Methacrylsäureester gemäß Beispiel 1
3 % Cumolhydroperoxidlösung (70 %ig in Cumol) und
1 % Tri-n-butylamin

Zur Stabilisierung enthielten die Kleber insgesamt 0,01Gew.-% an Hydrochinon.

Auch wurde ein Vergleichskleber hergestellt, der als polymerisierende Komponente nur Triethylenglykoldimethacrylat enthielt.

Es wurde mit den anaeroben Klebstoffen an rost- und fettfreien Lagerwellen und zylindrischen Ringen die Druckscherfestigkeit bestimmt, wobei unterschiedlich rauhe Oberflächen gewählt wurden.

In der nachfolgenden Tabelle 1 sind die gefundenen Werte nach 72 Stunden bei 20 °C wiedergegeben:

Tabelle 1:

| Klebstoff | rauhe Oberfläche $R_z$ = 6 - 10 μm | glatte Oberfläche $R_z$ = 1 - 2 μm |
|---|---|---|
| 2a | 22 $N/mm^2$ | 25 $N/mm^2$ |
| 2b | 18 $N/mm^2$ | 27 $N/mm^2$ |
| Vergleich | 13 $N/mm^2$ | 25 $N/mm^2$ |

In der nachstehenden Tabelle 2 ist die Druckscherfestigkeit nach 72-stündiger Lagerung bei 20 °C und 3-stündiger Belastung bei 210 °C und Prüfung bei dieser Temperatur wiedergegeben:

Tabelle 2:

| Klebstoff | rauhe Oberfläche $R_z$ = 6 - 10 μm | glatte Oberfläche $R_z$ = 1 - 2 μm |
|---|---|---|
| 2a | 12,1 $N/mm^2$ | 14,7 $N/mm^2$ |
| 2b | 8,0 $N/mm^2$ | 10,3 $N/mm^2$ |
| Vergleich | 5,2 $N/mm^2$ | 3,1 $N/mm^2$ |

**Patentansprüche**

**1.** Neue Verbindung der allgemeinen Formel:

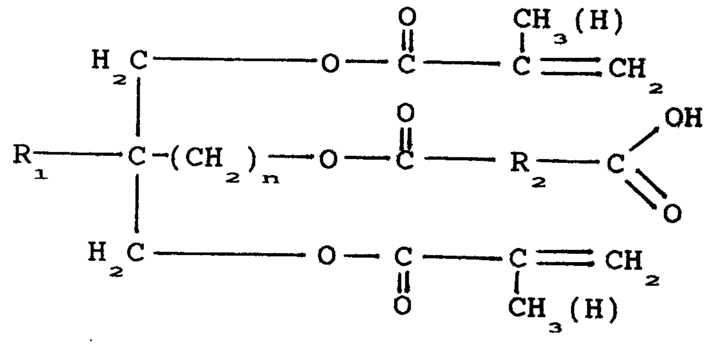

oder

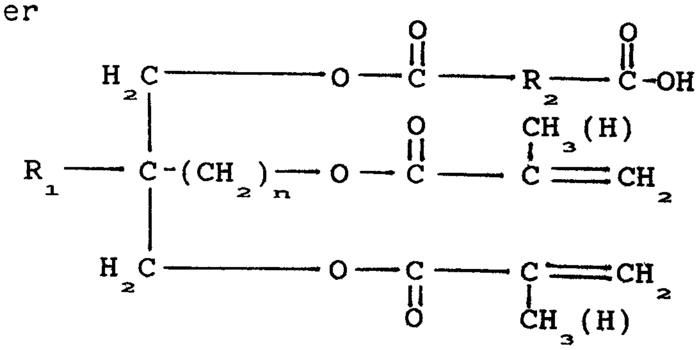

wobei n 0 oder 1 ist und $R_1$ entweder H oder ein Alkylrest mit 1 bis 3 Kohlenstoffatomen ist und $R_2$ eine freie Carboxylgruppe und keine Heteroatome aber gegebenenfalls Doppelbindungen enthaltender Rest mit 2 bis 8 Kohlenstoffatomen, der aliphatischer, cycloaliphatischer oder aromatischer Natur sein kann, sowie Gemische der beiden stellungsisomeren Typen.

**2.** Neue Verbindungen der allgemeinen Formel nach Anspruch 1, in der der Rest $R_2$ einen gegebenenfalls eine oder zwei Doppelbindungen enthaltenden aliphatischen oder cycloaliphatischen Rest mit 2 bis 7 oder einen aromatischen Rest mit 6 Kohlenstoffatomen bedeutet.

**3.** Verfahren zur Herstellung von Di(meth)acrylsäureester nach Anspruch 1 und 2, dadurch gekennzeichnet, daß man Di(meth)acrylsäureester von trifunktionellen Alkoholen aus der Gruppe Glyzerin, Trimethylolmethan, -ethan oder -propan, mit einer der Säuren bzw. deren Anhydriden aus der Gruppe von Bernsteinsäure, Adipinsäure, Maleinsäure, Hexahydrophthalsäure, Phthalsäure oder Bicyclo-[2,2,1]-hept-5-en-2,3,-dicarbonsäure im molaren Verhältnis von etwa 1:1 umsetzt.

**4.** Verwendung der neuen Verbindungen nach Anspruch 1 und 2 bzw. der Verfahrensprodukte nach Anspruch 3, gegebenenfalls in Abmischung mit anderen (Meth)acrylsäureestern als bei Sauerstoffausschluß erhärtende Klebe-, Dichtungs- oder Füllmassen.

**5.** Verwendung der neuen Verbindungen nach Anspruch 1 und 2 bzw. der Verfahrensprodukte nach Anspruch 3 als durch Aktivierungsmittel und/oder bei Bestrahlung durch UV-Licht oder Elektronenstrahlung härtbare bzw. vernetzbare Klebmittel.

## Claims

**1.** A new compound corresponding to the following general formula

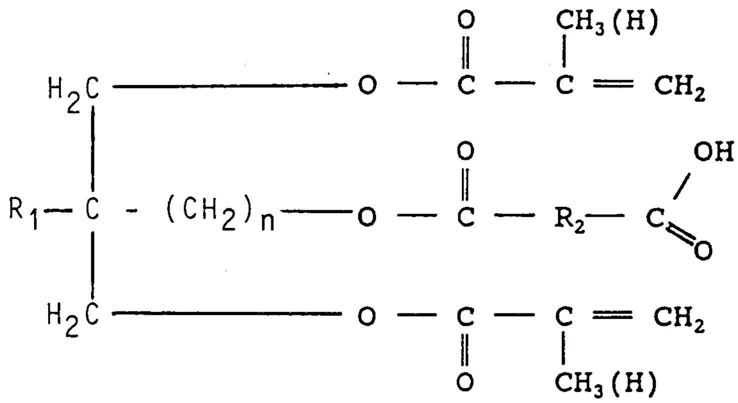

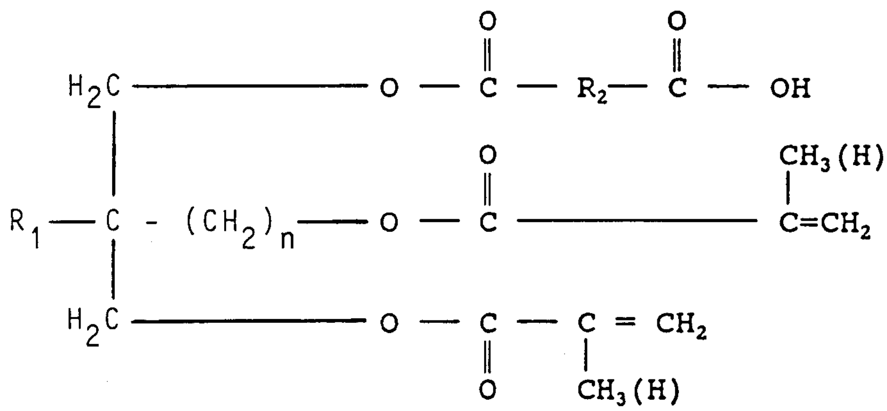

in which n = 0 or 1, $R_1$ is either H or a $C_{1-3}$ alkyl group and $R_2$ may be a $C_{2-8}$ aliphatic, cycloaliphatic or aromatic radical containing a free carboxylic group, but no heteroatoms, and optionally double bonds,
and mixtures of the two position isomers.

**2.** New compounds corresponding to the general formula in claim 1, in which $R_2$ is an aliphatic or cycloaliphatic $C_{2-7}$ radical optionally containing 1 or 2 double bonds or an aromatic $C_6$ radical.

**3.** A process for preparing the di(meth)acrylic acid esters claimed in claims 1 and 2, characterized in that di(meth)acrylic acid esters of trifunctional alcohols belonging to the group consisting of glycerol, trimethylol methane, trimethylol ethane or trimethylol propane, are reacted with one of the acids or anhydrides from the group consisting of succinic acid, adipic acid, maleic acid, hexahydrophthalic acid, phthalic acid or bicyclo-[2.2.1]-hept-5-ene-2,3-dicarboxylic acid in a molar ratio of approximately 1:1.

**4.** The use of the new compounds claimed in claims 1 and 2 as produced by the process claimed in claim 3, optionally in admixture with other (meth)acrylic acid esters, as adhesive, sealing or filling compositions hardening in the absence of oxygen.

**5.** The use of the new compounds claimed in claims 1 and 2 as produced by the process claimed in claim 3 as adhesives curable or crosslinkable by activators and/or by irradiation with UV-light or electron beams.

**Revendications**

**1.** Nouveau composé de formule générale :

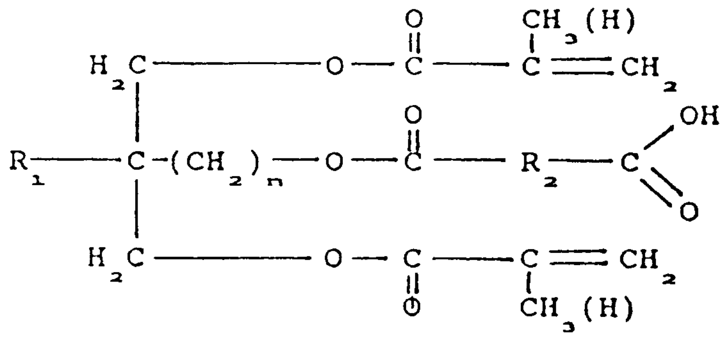

ou

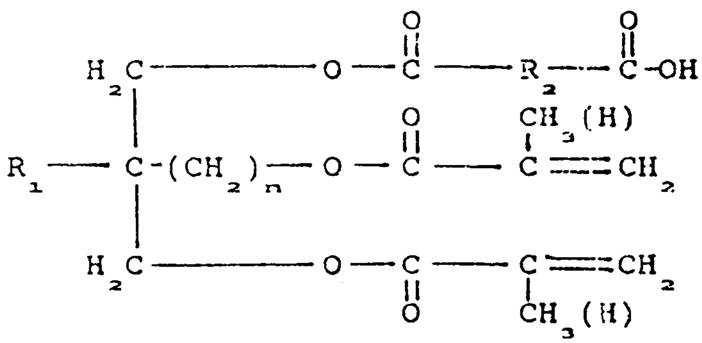

dans laquelle n est 0 ou 1 $R_1$ est soit H, soit un radical alcoyle ayant de 1 à 3 atomes de carbone et $R_2$ est un groupe carboxylique libre et un radical ne contenant pas d'hétéroatome mais, le cas échéant, des doubles liaisons, ayant de 2 à 8 atomes de carbone, qui peut être de nature aliphatique, cycloaliphatique ou aromatique ainsi que des mélanges des deux types d'isomères de position.

**2.** Nouveaux composés de formule générale selon la revendication 1, dans laquelle le radical $R_2$ signifie un radical aliphatique ou cycloaliphatique renfermant éventuellement une ou deux doubles liaisons, ayant de 2 à 7 atomes de carbone, ou un radical aromatique ayant 6 atomes de carbone.

**3.** Procédé d'obtention des esters d'acide di(méth)acrylique selon les revendications 1 et 2, caractérisé en ce que l'on fait réagir un ester di(méth)acrylique d'alcool tri-fonctionnel choisi dans le groupe formé du glycérol, du triméthylolméthane, du triméthylol éthane et du triméthylol propane avec un des acides ou un de leur anhydride choisi dans le groupe formé par l'acide succinique, l'acide adipique, l'acide maléique, l'acide hexahydrophtalique, l'acide phtalique et l'acide bicyclo-[2, 2, 1]-hept-5-en-2,3-dicarboxylique, en proportion molaire d'environ 1 : 1.

**4.** Utilisation des nouveaux composés selon les revendications 1 et 2, ou des produits du procédé selon la revendication 3, le cas échéant en mélange avec d'autres esters d'acide (méth)acrylique en tant que masse de collage, d'étanchéité ou de remplissage qui durcissent à l'abri de l'oxygène.

**5.** Utilisation des nouveaux composés selon les revendications 1 et 2 ou des produits du procédé selon la revendication 3 en tant que colle réticulable ou durcissable par un agent d'activation et/ou par irradiation par la lumière UV ou par rayonnement d'électrons.